# EUROPEAN PATENT APPLICATION

(11) **EP 3 296 268 A1**
(43) Date of publication of application: **21.03.2018**
(21) Application number: 17191217.3
(22) Date of filing: 14.09.2017
(51) Int. Cl.: C02F 1/28, B01J 20/06, B01J 20/12, B01J 20/32, C02F 101/10

(54) **PHOSPHATE REMEDIATION MEDIA**

(30) Priority: 14.09.2016 GB 201615664
(71) Applicant: Emms, Derrick, Kirknewton West Lothian EH27 8AB (GB)
(72) Inventor: Emms, Derrick, Kirknewton West Lothian EH27 8AB (GB)
(74) Representative: Ellis, Michael James

(57) **Abstract**

A remediation media, which enables the effective remediation of phosphates and organic phosphorus pollutants from waste water (e.g. land run-off or more particularly sewage waste), in a highly effective manner with manageable materials, is obtainable by providing a blend of a target pollutant-adsorbing agent comprising an iron oxide and a binder comprising a bentonite, forming pellets of the mixture and thermally treating the pellets to form self-supporting pellet remediation media. The media is in the form of a manageable pellet which is self-supporting and does not disintegrate after use whilst being very effective at adsorption of phosphates and organic phosphorus.

## Description

### FIELD OF THE INVENTION

This invention pertains generally to the field of remediation of waste water and to the use of a media for facilitating wastewater remediation, such as capture and/or removal of phosphates. More particularly, the invention relates to a remediation media, a method of manufacturing the same, a method of remediation and a remediation system.

### BACKGROUND OF THE INVENTION

Wastewater streams frequently contain pollutants or components which if released to water courses or to the environment may cause pollution or instances of pollution. Phosphates, including organic phosphorus, is a class of compounds and materials that are commonplace in wastewater, such as sewage and agricultural run-off.

Municipal sewage systems after the conventional treatment steps need to treat the wastewater to remove phosphates before transfer to the environment. The conventional method of doing so is to contact the wastewater with activated carbon and in particular with activated iron salts (either ferrous sulphate or ferric chloride/sulphate) and potentially adjust pH thereafter. However, the phosphate removal steps are costly using this process, particularly with regard to small and medium sized local municipal sewage treatment works.

Off-grid sewage systems for private housing or community housing utilize reed bed systems for treatment. However, these systems still require water to be finally treated.

In the case of agricultural run-off which can be rich in phosphates and thus potentially harmful to the marine environment, but will require a solution to curb pollution levels.

It would be desirable to have a media which is effective in removing potential polluting components, such as phosphates from wastewater streams and, in particular, sewage and to have a system which could make effective this media.

The present inventor has devised a media, method and system for addressing this problem.

### PROBLEM TO BE SOLVED BY THE INVENTION

There is a need for improvements in remediation of pollutants, such as phosphates, from waste water.

It is an object of the invention to provide an improved, media, system, method and process for remediation of pollutants, such as phosphates, from waste water.

It is a further object of the invention to provide a system for accommodating the media that can be adapted for use with wastewater streams including municipal sewage systems, reed beds and agricultural run-off.

### SUMMARY OF THE INVENTION

In accordance with a first aspect of the invention, there is provided a method for the production of a remediation media, the method comprising providing a blend or mixture of at least one target pollutant-adsorbing agent and a binder, forming particles or pellets of the mixture and subjecting the particulate or pelletised mixture to a thermal treatment to form self-supporting particle or pellet remediation media.

In a second aspect of the invention, there is provided a remediation media comprising self-supporting pellets or particulates of a blend or mixture of at least one target pollutant-adsorbent agent and a binder.

In a third aspect of the invention, there is provided a remediation media obtainable by providing a blend or mixture of at least one pollutant adsorbing agent and a binder, forming particles or pellets of the blend or mixture and subjecting the particles or pellets to a thermal treatment to form a self-supporting particle or pellet remediation media.

In a fourth aspect of the invention, there is provided a method for the remediation of phosphates or organic phosphorus from water or waste-water, the method comprising contacting the water or waste-water with a media as defined above.

In a fifth aspect of the invention, there is provided a soil conditioning media comprising a phosphate-rich media obtainable by the above method.

In a sixth aspect of the invention, there is provided a system for use in remediation of waste water, the system comprising a remediation flow passage for a flow of wastewater having a longitudinal direction being the direction of flow of water and a width substantially transverse the longitudinal direction, the flow passage having and inlet and an outlet; and at least one porous containment means for containing remediation media for contact with the flow of wastewater between the inlet and the outlet, the at least one porous containment means disposed across the width of the flow passage.

### ADVANTAGES OF THE INVENTION

The method and media of the present invention enable the effective remediation of pollutants, especially phosphates and organic phosphorus from waste water (e.g. land run-off or more particularly sewage waste), in a highly effective manner with manageable materials. The media has the advantage of having a manageable pellet or particulate form which is self-supporting and does not completely disintegrate after use whilst being very effective at adsorption of pollutants, particularly phosphates and organic phosphorus. The system enables the use of the media in a practical setting.

### BRIEF DESCRIPTION OF THE DRAWINGS

Figure 1 is a schematic illustrating a system for the production of a remediation media according to one aspect of the invention;
Figure 2 is a schematic illustrating a wastewater remediation system according to another aspect of the invention;
Figure 3 is a schematic illustrating an alternative wastewater remediation system according to an aspect of the present invention; and
Figure 4 is a schematic illustrating a flow section or tray for use in a system of Figure 3.

### DETAILED DESCRIPTION OF THE INVENTION

The invention is concerned with remediation media in the form of pellets or particulates. The pellets or particulates may be characterized by their method of production, in which the pellets or particles are subjected to a thermal treatment to form self-supporting particles or pellets. The pellets or particulates may also be characterized by being self-supporting pellets or particulates, non-ceramic and non-glassy, and retaining integrity in an aqueous environment (and thereby are recoverable).

The method of production comprises providing a blend or mixture of at least one target pollutant-adsorption agent and a binder, forming particles or pellets of the mixture, typically by extrusion (e.g. forming extrusions) and subjecting the particulate or pelletised mixture (e.g. extrusions) to a thermal treatment to form self-supporting particle or pellet remediation media.

Preferably, the treatment is so as to provide particles or pellets having a porous micro- or nano-structure and preferably so as to inhibit glassification or forming of a ceramic. Thereby, it is believed that adsorption performance can be high whilst contact area and porosity maintained so as to maximize rate and efficiency of adsorption performance in a readily manageable and recoverable media.

Preferably, the media is in the form of pellets, typically formed by extrusion. Hereinafter, the invention will be described in terms of pellets but should be understood, where the context allows, to also describe in the alternative pellets or particulates formed from any suitable method.

The remediation media is preferably for removing a pollutant from water, such as a waste water stream (e.g. agricultural runoff or sewage) to allow it to be released to the sea or a water course such as a river. The pollutant may of course be a pollutant because of its concentration or combination of components, whereas it may be regarded as a nutrient in other circumstances. This is particularly the case for organic phosphorus content or nitrogen content of water, for example. The term pollutant is considered in a relative term and should be understood to be a component the removal of which from the waste water stream is desirable. The remediation media may be for the removal of any pollutant capable of being adsorbed by the media. The remediation media may, for example, be for removing phosphorus (e.g. phosphates and other phosphorus-containing species), nitrogen (e.g. nitrates and other nitrogen-containing species such ammonia), biochemical oxygen demand (e.g. organic compounds requiring to be broken down) or chemical oxygen demand (e.g. the general amount of organic species in the water) or a combination thereof and/or for removing metals or metal complexes such as those comprising iron, selenium, copper, chromium, cadmium, manganese and aluminium. Preferably, the remediation media is for the removal of phosphorus (e.g. phosphates and other phosphorus-containing species), and/or nitrogen (e.g. nitrates and other nitrogen-containing species such ammonia) from waste water.

In one embodiment, the method and media is for the removal of nitrogen from waste water or run off, such as organic nitrates or ammonia.

The method and media of the invention find particular application in remediation of phosphates or organic phosphorus. The terms phosphates and organic phosphorus are used herein interchangeably to refer to the class of phosphorus containing pollutants that are common in agriculture run-off and in sewage waste. The remediation media is therefore preferred for the remediation of phosphate and/or organic phosphorus, such as from phosphate-rich water.

The target pollutant-adsorption agent, which is particularly preferred in the case of phosphorus remediation (but also in nitrogen remediation), preferably comprises an iron oxide (or hydrated iron oxide). More preferably, it is an iron (III) oxide (e.g. an hydrated iron (III) oxide). More preferably, the pollutant-absorption agent is a mineral iron oxide (or hydrated iron oxide) such as an ochre or a hematite. The agent may comprise, for example, mixtures of FeO.OH and/or Fe(OH)₃. Most preferably, the pollutant-adsorption agent comprises ochre and most preferably is ochre. In a particularly preferred embodiment, the ochre used in the media and method of the present invention is derived from mine-water runoff (e.g. harvested from oxidized settlement ponds from mine-water run off).

Ochres from a variety of sources and thus a variety of mines may be used. The ochre may comprise hematites, goethites, pyrites or limonite. Optionally, it is a hematite rich ochre (which tends to be referred to as red ochre) or may be a relatively goethite rich ochre (which tends to be referred to as yellow ochre). The ochre may be mine-water derived ochre, which is recovered in treatment, settlement ponds and reed beds fed by mine-water drainage or run-off. For example, the ochre may be of the type derivable from any one of the following UK mines: Bates, Polkemmet, Bullhouse, Blindwells, Deerplay, Woolley, Minto, Caphouse, Old Meadows, Monktonhall, Cuthill, Fordell Castle, Mouse Water, or a mixture thereof or of similar or comparable content to those mines from other sources. The ochre used in the media of the present invention may have any of a range of particle size ranging from course granular particles to fine powders. The particle size may be, for example, from an average of 100 nm to 10 mm, or more preferably from 1 µm to 5 mm, e.g. from 5 µm to 1 mm, e.g. at least 10 µm. Optionally, the average particle size is from 10 µm to 500 µm (e.g. from 100 to 250 µm) or from 250 µm to 5 mm (e.g. 1 mm to 2.5 mm) or a mixture of such particle sizes and optionally the range of particle sizes may be any of the above ranges.

The ochre for use in media of the present invention should have been subject to a drying step or otherwise allowed to dry to have a water content of no more than 35%, preferably no more than 30%, still more preferably no more than 25% and most preferably no more than 20% and optionally up to 15% or even 10%. In a preferred embodiment, the water content of the ochre used in the production of media of the invention is from 10 to 20 % by weight.

The pellets may be made using any suitable binder, depending upon the application. The choice and quantity of binder may affect properties of the resulting pellets such as, for example, its pollutant adsorption properties, variety of pollutants that may be remediated and the pH of the pellets which may affect the situations in which they may be used or the after-treatment necessary to waste-water from which phosphorus has been captured.

In one embodiment, the binder may be lime. According to this embodiment, the pH of the pellets may typically be alkaline. In this embodiment, there is particular application to the removal of nitrogen from waste water or agricultural run-off, although such a remediation method may further require an acidification step of the treated water.

In one embodiment, the binder may be a polymer binder such polyvinyl alcohol.

Preferably, the pH of the media is up to 10, more preferably up to 9 and ideally between 6.5 and 8.5.

Preferably, the binder is a mineral binder comprising a clay or clay material such as a bentonite. The bentonite may be sodium or calcium bentonite but is preferably sodium bentonite. The binder may include other materials, including other clays or bentonite containing materials such as mudstone,

The adsorption agent, which is preferably ochre (and will be referred to as ochre hereinafter, but any iron oxide or other adsorption again should be understood as being disclosed as an alternative where the context allows), is preferably provided in an amount to form at least 50% by weight, more preferably 70 to 90% by weight of the resulting particulate or pellet remediation media.

The binder is preferably provided in an amount of at least 5% by weight of the resulting pellet, more preferably at least 10%, preferably 10 to 50% by weight of the resulting particulate or pellet remediation media.

In a particularly preferred embodiment, the remediation media comprises ochre and a bentonite. Preferably, the ochre is present in an amount of 70 to 90% by weight of the total content of ochre and bentonite. The bentonite may be present in an amount of 10 to 30% by weight of the total content of ochre and bentonite.

The pellets may be of any suitable size or shape, but according to one embodiment, the pellets have a minimum dimension in the range of 2 mm to 30 mm preferably 5 to 15 mm. Preferably the pellets have a maximum dimension in the range 2 mm to 50 mm, preferably 10 to 20 mm.

In the method of the invention, the thermal treatment should be conducted for a sufficiently short duration and/or at a sufficiently low temperature such that the pellets do not become ceramic or glass.

The thermal treatment comprises heating (or calcining) the extruded, particulate or pelletised mixture at a temperature of up to 1000 °C for a pre-determined time. Preferably, the thermal treatment comprises heating the particulate or pelletised mixture at a temperature in the range 600 °C to 950 °C, more preferably up to 900 °C, still more preferably up to 850 °C. More preferably, the calcining takes place at at least 650 °C, more preferably at least 700 °C.

The thermal treatment preferably is for a period of up to 6 hours, more preferably up to 4 hours, still more preferably up to 3 hours, still more preferably up to 2 hours, yet more preferably in the range 30 minutes to 90 minutes, e.g. at least 45 minutes and ideally around 60 minutes (e.g.50-70 minutes).

The water content or moisture content of the extrusions or precalcined pellets is preferably maintained to a level of no more than 20%, more preferably no more than 15% and preferably up to 10%. Ideally, there should be some water content (as it is believed this aids the formation of pores and a content of say 2 to 8% or even 5% is considered to be ideal).

To ensure that moisture content (and any other volatile content) is controlled to be at a desired amount, a drying step may be carried out prior to the thermal treatment. The drying treatment preferably comprises heating the particulate or pelletised mixture for a predetermined period at a temperature of up to 250 °C, preferably at least 60 °C and more preferably in the range of 100 to 150 °C. Preferably, the drying step is for a period of up 180 minutes, preferably from 30 to 90 minutes and more preferably 45 to 75 minutes. Preferably the particles or pellets after the drying treatment have a moisture content of up to 10% by weight.

The pellets are preferably formed by extruding through an extruder. For forming the mixture and carrying out extrusion or pelletisation, the mixture which may form a putty, preferably has a moisture content of no more than 35%, preferably up to 30% by weight prior to the drying treatment, preferably up to 25% and more preferably up to 20%.

The remediation media may comprise further additives which may be, for example, zeolites such as natural zeolites, carbon black or activated carbon, microbes for consuming certain organic material, wood chips or sawdust or other complementary pollutant adsorbing, absorbing, reacting or consuming agent. Where such further additives are present, they may comprise up to 30% of the total weight of the remediation media, more preferably from 5 to 10%.

The media according to a preferred embodiment in which the agent is an iron oxide may be used for the remediation of phosphorus from water or waste water. This method preferably comprises contacting the water or waste-water with a media as defined above.

After the phosphorus is taken up, the media is exhausted or consumed. As the media retains its integrity, it can be managed and manipulated for further use. In a preferred embodiment in which the original media is iron rich, the exhausted media is phosphate rich also. Thus, the invention further comprises a soil conditioning media comprising a phosphate-rich media obtainable by remediation of phosphate with iron-rich media as described above.

In another aspect of the invention, there is provided a system for use in remediation of waste water, the system comprising a remediation flow passage for a flow of wastewater having a longitudinal direction being the direction of flow of water and a width substantially transverse the longitudinal direction, the flow passage having and inlet and an outlet; and at least one porous containment means for containing remediation media for contact with the flow of wastewater between the inlet and the outlet, the at least one porous containment means disposed across the width of the flow passage. Preferably, the containment means contains remediation media as described above or may contain an iron (II) oxide or iron (III) oxide or hydrate thereof (e.g. as a component of at least 10% of the media, e.g. at least 30% or at least 50%) and most preferably pellets of ochre and bentonite (preferably made by the methods of other aspects of the present invention).

The remediation flow passage may, according to one embodiment, comprise a flow bed having an inlet and an outlet, which inlet is fed with a waste water stream. The bed may be provided with porous containment means containing remediation media, typically disposed transversely across the bed, the bed and containment means configured such that the flow is directed through the containment means and not about it. Preferably, multiple containment means are provided in series, e.g. two or three, or four or six or eight or ten, or up to 30, e.g. from 5 to 25.

The bed, according to this embodiment, may be provided with a base layer, which may be synthetic or natural base layer that preferably inhibits egress of water or contaminants from the bed other than via the outlet. A shallow layer of balls or pebbles or similar smooth-surfaced media may be disposed to encourage flow but at a controlled rate (can be referred to as flow control media). Containment means may be disposed on the flow control media or directly onto the base layer (e.g. with flow control media banked up either side of the containment means). Optionally, reeds or other remediation-assisting plants may be planted in or about the containment means, e.g. in growth vessels either side of the containment means, to control flow and uptake of contaminants.

The containment means may comprise any suitable form and preferably is configured that it may be placed in the flow passage for use and removed when the media within is consumed or exhausted. Optionally, the containment means is configured to contain further containment means and may be accessed for removal and replacement of media. The containment means may be a regular or irregular shape and may be rigid and self-supporting or flexible. Optionally, the containment means is stowed in a supporting means, which typically will also be porous (e.g. a large pore diameter cage arrangement).

In one preferred embodiment, the containment means comprises a flexible porous membrane container or sock. This may typically be a mesh tube, which can be secured at the ends to prevent loss of media. The mesh may be of any suitable size but should be sized to allow maximum inflow of water whilst limiting loss of media (e.g. it should have a mesh diameter less than the diameter, such as the smallest dimension, of the media or pellet it contains). The mesh may have a diameter, for example of up to 30 mm and of at least 0.1 mm. Preferably, the mesh has a mesh diameter of at least 1 mm, more preferably at least 2 mm and preferably up to 20 mm, more preferably up to 15 mm and still more preferably up to 10 mm. Preferably the mesh tube may have a mesh diameter of from 2 to 15 mm (e.g. 3 to 10 mm, or 4 to 8 mm) such as to maximize throughflow and contact whilst inhibiting release of media.

The mesh tube may be of any suitable size and may be for example of a tube diameter of up to 1 m, more preferably up to 50 cm, still more preferably from 5 cm to 30 cm, e.g. 10 cm to 25 cm. The mesh tube should be of a suitable length to extend across the flow passage, preferably in a single unit but optionally in multiple units and may be for example from 50 cm to 3 m (e.g. 1 m to 1.5 or 2 m) in length.

The mesh may be of any suitable mesh pattern, including diamond, hexagonal, pentagonal, oval, round, square or a combination thereof.

A mesh containment means may comprise any suitable material, which may be biodegradeable and/or compostable (but configured not to biodegrade in situ, but at a later stage - e.g. on application to a processing plant for soil conditioner or directly to land as fertilizer) or may be non-biodegradable. A mesh may be formed of cotton, a natural fiber, UV-sensitive plastic, and/or biodegradable polymer, potentially formed from a plastic and/or starch, and in certain embodiments, can biodegrade at a predetermined rate of biodegradation. For example, the netting material can be selected to biodegrade within about 1 month to about 5 years, including from 1 year to 3 years (or from 3 years to 5 years). Alternatively, a mesh material can resist biodegradation. The mesh may be fabricated from, plastic, UV-inhibited plastic, polyester, polypropylene, multifilament polypropylene, polyethylene, LDPE, HDPE, rayon, and/or nylon. The mesh tube is preferably a mesh that is available from Filtrexx™ Sustainable Technologies.

In another embodiment, the remediation flow passage comprises a vessel or unit having an inlet or an outlet and therebetween a flow passage having one or plurality of remediation media containment means. The flow passage may be defined by a series of flow sections, such as trays or conduits. Optionally flow sections may be arranged for alternate or reciprocating flow directions. Optionally each flow section may define a direct flow path from one end to the other via a series of baffles to slow the flow (thereby increasing contact time with remediation media). Each flow section may optionally be connected by one or a plurality of conduits, e.g. apertures which may lead from a sump at one end of a tray, to the next tray and continue flow along the flow passage, in the next flow section, in the generally opposite direction. In one embodiment, the flow section (e.g. in the form of a tray) is the containment means. Thus, the system may comprise a plurality of flow sections in the form of trays that act as containment means and can be independently substituted when media is exhausted. Alternatively, the flow passage (e.g. each of a plurality of flow sections) may be provided with porous containment means containing remediation media. These may be arranged in series and configured such that waste water may flow through the containment means to make contact with the remediation media. These may be rigid containment means or flexible means such as the tubular mesh such as described above.

Where the flow passage is the containment means, there may be interspersed with the remediation media (such as pellets) a flow control media for controlling or slowing the passage of flow through the flow passage (thereby increasing contact time with remediation media).

The flow control media in any embodiment may be pebbles or other material defining intersticial spaces for flow it to flow through. The flow control media may be ovals or spheres or balls, or irregular shaped materials. They may be stones or a media such as zeolites (natural or synthetic), in which case they act also as an adsorbing agent. The flow control media may be sized from 0.25 mm to 20 mm, optionally at least 5 mm (or at least 10 mm), preferably 0.5 mm to 10 mm, e.g. 4 to 8 mm.

Preferably the contact time of waste water with media (or in the system) is at least 30 minutes and preferably up to 8 hours, such as at least 1 hour and optionally from 2 to 6 hours and most preferably about 4 hours (e.g. 3.5 hours to 5 hours).

Optionally, the system is configured such that waste water may flow through the vessel from inlet to outlet under gravity (in which case the inlet should be configured to be higher than the outlet) or under pressure, e.g. pumped (in which case the inlet may be configured to be higher, lower or at the same height as the outlet).

Optionally, the system may comprise a plurality of such flow passages in parallel to accommodate a pre-defined flow rate whereby contact time between water and media may be maximized.

### EXAMPLES

### Example 1

Ochre pellets for phosphorus remediation pellets are prepared by mixing ochre obtained from mine-water remediation settlement ponds and allowed to dry to have no more than 20% moisture content with sodium bentonite in a ratio of 80:20 by weight. The mixture, which forms a putty, was passed through an extruder to form pellets of 5mm diameter and a length of 20 mm. These were dried in a drier at 120° for 20 minutes at which point the moisture content of the pellets is no more than ∼10% and then baked at 800 °C fir 60 minutes in a kiln.

The resulting pellets are self-supporting pellets having a porous micro- or nano-structure. They may be crushed to form a powder, but retain their integrity even after their use in phosphate or organic phosphorus remediation from water.

### Example 2

A series of samples of ochre pellets were prepared, according to the general method of Example 1. They were formed from ochre alone, or with from 5 to 15 binder of either calcium bentonite or sodium bentonite and baked at a temperature of from 600 to 1000 °C. Ochre used in these pellets is from the Whittle colliery treatment system.

The phosphorus remediation capacity of each sample of pellets was assessed. This assessment was carried out by placing the pellets (providing 3g equivalent of ochre) in 10 ml aliquots of an aqueous solution of phosphorus having a concentration of 10 mg/l. At the end of a 15 minute contact period, each aliquot was filtered to remove spent remediation media (ochre) and the concentration of phosphorus in the filtrate measured to determine the phosphorus uptake by each of the pellet samples. An untreated aliquot (sample 34) was used as a control and other remediation media - Whittle ochre with no thermal treatment (sample 30), lime ochre, being ochre with a lime additive but no thermal treatment (sample 31), and each of the sodium bentonite (sample 32) and calcium bentonite (sample 33) binders alone - were also used.

The results are set out in Table 1 below.

**Table 1**

| **Sample no** | **Pellet sample make-up** | **Pellet sample preparation** | **Phosphorous concentration after equilibration (mg/L)** | **% P absorbed** |
|---|---|---|---|---|
| 1 | Ochre + 5% calcium | Heated at 600 °C for 4 hours | 1.39 | 85.8 |
| 2 | Ochre + 5% sodium | | 1.18 | 87.9 |
| 3 | Ochre+ 10% calcium | | 1.37 | 86.0 |
| 4 | Ochre + 15% calcium | | 2.16 | 77.9 |
| 5 | Ochre + 10% sodium | | 2.10 | 78.5 |
| 6 | Ochre + 15% sodium | | 2.64 | 73.0 |
| 7 | Ochre + 5% calcium | Heated at 700 °C for 4 hours | 0.007 | 99.9 |
| 8 | Ochre + 5% sodium | | 0.007 | 99.9 |
| 9 | Ochre + 10% calcium | | 0.007 | 99.9 |
| 10 | Ochre + 15% calcium | | 0.007 | 99.9 |
| 11 | Ochre + 10% sodium | | 0.015 | 99.8 |
| 12 | Ochre + 15% sodium | | 0.006 | 99.9 |
| 13 | Ochre + 5% calcium | Heated at 800 °C for 4 hours | 0.010 | 99.9 |
| 14 | Ochre + 5% sodium | | 0.010 | 99.9 |
| 15 | Ochre + 10% calcium | | 0.012 | 99.9 |
| 16 | Ochre + 15% calcium | | 0.018 | 99.8 |
| 17 | Ochre + 10% sodium | | 0.012 | 99.9 |
| 18 | Ochre + 15% sodium | | 0.007 | 99.9 |
| 19 | Ochre + 5% calcium | Heated at 900 °C for 4 hours | 0.032 | 99.7 |
| 20 | Ochre + 5% sodium | | 0.107 | 98.9 |
| 21 | Ochre + 10% calcium | | 0.070 | 99.3 |
| 22 | Ochre + 15% calcium | | 0.204 | 97.9 |
| 23 | Ochre + 10% sodium | | 0.134 | 98.6 |
| 24 | Ochre + 15% sodium | | 0.040 | 99.6 |
| 25 | Ochre + 5% calcium | Heated at 1000 °C for 4 hours | 7.78 | 20.5 |
| 26 | Ochre + 5% sodium | | 6.51 | 33.5 |
| 27 | Ochre + 10% calcium | | 6.82 | 30.3 |
| 28 | Ochre + 15% calcium | | 6.90 | 29.5 |
| 29 | Ochre + 15% sodium | | 4.74 | 51.5 |
| 30 | Whittle ochre | No heat treatment | 0.02 | 99.8 |
| 31 | Lime ochre | | 0.01 | 99.9 |
| 32 | Calcium bentonite | | 8.80 | 10.0 |
| 33 | Sodium bentonite | | 8.87 | 9.3 |
| 34 | 10 mg/l P | - | 9.78 | |

As can be seen above, whilst the untreated ochre (samples 30 and 31) are effective at adsorption of phosphorus, these samples were not in the form of pellets and provide a sludge which is difficult to handle. Calcium bentonite and sodium bentonite alone (samples 32 and 33) showed some phosphorus adsorption capacity (∼10% in this test). In the thermally treated ochre pellet samples 1 to 29, it is clear that thermal treatment of 1000 °C during production of the pellets (samples 25 to 29) significantly impaired the phosphorus uptake, it is believed because of the thermal treatment causing the pellet to become ceramic. The phosphorus uptake in this category of pellets ranged from ∼20% to ∼50% depending on the proportion and nature of binder.

Pellets formed with heat treatment of 600 to 900 °C at all binder proportions tested demonstrated adequate uptake of phosphorus. However, a 600 °C, the uptake ranged from 77-86%, whilst at 700, 800 and 900 °C the performance was considerably better (∼99%).

The phosphorus remediation capability was considerably enhanced by self-supporting pellets which did not disintegrate but were not so well-baked as to form glass or ceramic. The experiments appeared to illustrate that binder at 5, 10 and 15% was effective and that both sodium and calcium bentonite were effective.

The invention will now be described in more detail, without limitation, with reference to the accompanying Figures.

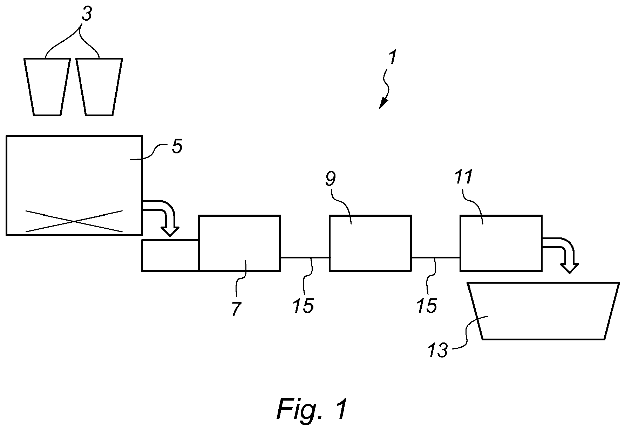

In Figure 1, a system 1 for the production of ochre pellets is shown, which comprises a pair of hoppers 3 for respectively ochre (typically from mine-water remediation ponds having been pre-processed to reduce water content to 20% maximum) and sodium bentonite. This delivers the ochre and bentonite to a mixer 5 which processes the mixture into a putty-like substance which is fed into a pelletiser comprising an extruder 7 which produces extrusions of 5 mm diameter and 20 mm length. The extrusions are dried in a drier 9 with a low heat of from 100-150 °C for about 20 to 30 minutes to drive off water and reduce moisture content in the extrusions to about 10%. Absent this step, there is a risk that the high kiln temperatures of the following step will cause disintegration of the pellets as large quantities of water are driven off. The extrusions are then baked for about 60 minutes at a temperature in the range of 600 to 900 °C in a kiln 11. The resulting pellets are self-supporting but remain porous rather than glass or ceramic. The pellets may be transferred to a storage or transport vessel 13. Typically, the process is somewhat automated and extrusions and pellets are passed from extruder through drier and kiln by a conveyor 15.

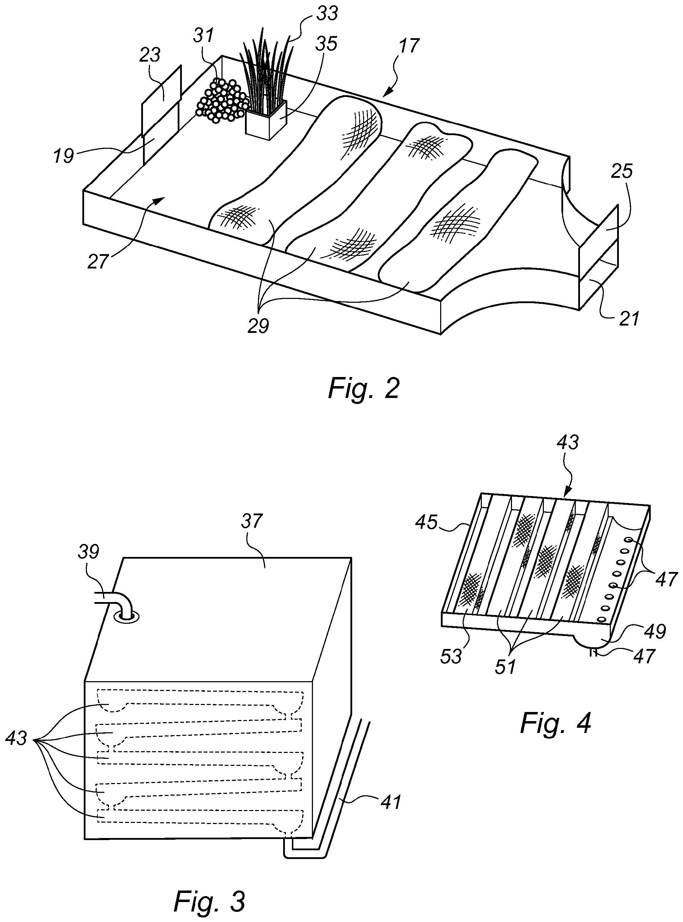

In Figure 2, a wastewater remediation system 17 comprises a bed for the passage of flow of wastewater to allow removal of contaminants such as phosphorus, the system comprising an inlet 19 and outlet 21 which inlet 19 and outlet 21 respectively comprise inlet and outlet closures 23, 25. A base layer or base membrane 27 is placed through the base of the bed 17. A plurality of transversely disposed Filtrexx™ tubular flexible polymer mesh members 29 filled with ochre and bentonite pellets are placed along the length of the bed 17. Water flowing through the system will flow through the media-filled mesh members 29 to make contact with the remediation media (not shown). Optionally between the mesh members 19 (which are containment means), a flow control media 31 which may comprise zeolite balls, may occupy the space before and between the remediation media, the size and quantity of such flow control media being effective in increasing the contact time of water with the remediation media. Further, optionally, reeds 33 may be planted in the bed, optionally in reed containers 35 disposed on the base of the bed 17. Optionally reeds 33 may be planted in the containment means 29.

In Figure 3, a wastewater remediation system comprises a vessel 37 having an inlet 39 and outlet 41, the vessel comprising a plurality of gravitational flow arranged removable trays 43 that define a flow passage and act to receive containment means 51, as is shown in Figure 4. Each tray 43 comprises a flow passage which leads to a sump 49 having a plurality of apertures 47 which allow the fluid to flow into the next successive tray 43. Containment means 51 are preferably rigid mesh containment means. A receiving member 53 is another containment means onto which fluid may flow from a preceding tray 43. Flow control media (not shown) may be disposed between containment means 51. Each tray may alternatively simply contain pellets of the invention and optionally mixed with flow control media, such as zeolite balls or pebbles. Preferably the contact time with media may be in the region of four hours and multiple vessels 37 may be used in parallel in this system.

The invention has been described with reference to a preferred embodiment. However, it will be appreciated that variations and modifications can be effected by a person of ordinary skill in the art without departing from the scope of the invention.

## Claims

1. A method for the production of a remediation media for the remediation of phosphate and/or organic phosphorus, such as from phosphate-rich water, the method comprising providing a blend or mixture of at least one target pollutant-adsorbing agent and a binder, forming particles or pellets of the mixture and subjecting the particulate or pelletised mixture to a thermal treatment to form self-supporting particle or pellet remediation media, wherein the at least one target pollutant-absorbing agent comprises an iron oxide and is provided in an amount to form at least 50% by weight of the resulting particulate or pellet remediation media and wherein the binder comprises a mineral binder.

2. A method as claimed in claim 1, wherein the pH of the media is up to 9.

3. A method as claimed in any one of the preceding claims, wherein the iron oxide is mineral iron oxide.

4. A method as claimed in claim 3, wherein the iron oxide is an ochre and/or a hematite.

5. A method as claimed in any one of the preceding claims wherein the binder comprises a mineral binder comprising a clay and/or a bentonite.

6. A method as claimed in claim 5, wherein the mineral binder is sodium bentonite.

7. A method as claimed in any one of the preceding claim, wherein the adsorbing agent is provided in an amount to form 70 to 90% by weight of the resulting particulate or pellet remediation media.

8. A method as claimed in any one of the preceding claims, wherein the binder is provided in an amount of 10 to 50% by weight of the resulting particulate or pellet remediation media.

9. A method as claimed in any one of the preceding claims, wherein the thermal treatment comprises heating the particulate or pelletised mixture at a temperature of up to 900 °C, preferably from 600 °C to 850 °C, for a predetermined time.

10. A method as claimed in any one of the preceding claims, wherein the thermal treatment comprises heating the particulate or pelletised mixture at a predetermined temperature for a period of from 30 to 180 minutes.

11. A method as claimed in any one of the preceding claims, wherein the particulate or pelletised mixture is subject to a drying treatment prior to the thermal treatment, wherein the drying treatment comprises heating the particulate or pelletised mixture at a temperature in the range of 60 to 150 °C for a period of up 180 minutes.

12. A remediation media for the remediation of phosphate and/or organic phosphorus, such as from phosphate-rich water, obtainable by providing a blend or mixture of at least one pollutant adsorbing agent and a binder, forming particles or pellets of the blend or mixture and subjecting the particles or pellets to a thermal treatment to form a self-supporting particle or pellet remediation media, wherein the at least one target pollutant-absorbing agent comprises an iron oxide and is provided in an amount to form at least 50% by weight of the resulting particulate or pellet remediation media and wherein the binder comprises a mineral binder.

13. A remediation media as claimed in claim 12, which is obtainable by any one or more of the further steps defined in any one of claims 2 to 11.

14. A method for the remediation of phosphates or organic phosphorus from water or waste-water, the method comprising contacting the water or waste-water with a media as defined in claim 12 or claim 13.

15. A soil conditioning media comprising a phosphate-rich media obtainable by the method of claim 14.
